# EUROPÄISCHE PATENTSCHRIFT

(11) **EP 2 724 133 B1**
(45) Veröffentlichungstag und Bekanntmachung des Hinweises auf die Patenterteilung: **13.06.2018**
(21) Anmeldenummer: 12718965.2
(22) Anmeldetag: 27.04.2012
(51) Int. Cl.: G01L 19/08, G01L 19/14

(54) **DRUCKSENSORANORDNUNG ZUR ERFASSUNG EINES DRUCKS EINES FLUIDEN MEDIUMS IN EINEM MESSRAUM**
PRESSURE SENSOR ARRANGEMENT FOR DETECTING A PRESSURE OF A FLUID MEDIUM IN A MEASUREMENT AREA
ENSEMBLE DÉTECTEUR DE PRESSION POUR DÉTECTER UNE PRESSION D'UN MILIEU FLUIDE DANS UN COMPARTIMENT DE MESURE

(30) Priorität: 21.06.2011 DE 102011077868
(43) Veröffentlichungstag der Anmeldung: 30.04.2014
(73) Patentinhaber: Robert Bosch GmbH, 70442 Stuttgart (DE)
(72) Erfinder: LUX, Alexander, 73760 Ostfildern (DE); MAST, Martin, 70839 Gerlingen (DE)
(86) Internationale Anmeldenummer: PCT/EP2012/057745
(87) Internationale Veröffentlichungsnummer: WO 2012/175241

(56) Entgegenhaltungen:
- WO-A2-2006/134151
- DE-A1-102007 052 364
- US-A- 5 181 423

## Beschreibung

### Stand der Technik

Aus dem Stand der Technik sind verschiedene Vorrichtungen und Verfahren zum Erfassen von Drücken von fluiden Medien, wie beispielsweise Gasen und Flüssigkeiten, bekannt. Die Messgröße Druck ist eine in Gasen und Flüssigkeiten auftretende, allseits wirkende, nicht gerichtete Kraftwirkung. Zur Messung der Drücke gibt es dynamisch und statisch wirkende Messwertaufnehmer bzw. Sensoren. Dynamisch wirkende Drucksensoren dienen nur zur Messung von Druckschwingungen in gasförmigen oder flüssigen Medien. Die Druckmessung kann direkt, über Membranverformung oder durch einen Kraftsensor erfolgen.

Insbesondere zur Messung sehr hoher Drücke wäre es ausreichend, einfach einen elektrischen Widerstand dem Medium auszusetzen, denn alle bekannten Widerstände zeigen mehr oder weniger ausgeprägt eine Druckabhängigkeit. Dabei gestaltet sich jedoch die Unterdrückung der gleichzeitigen Abhängigkeit der Widerstände von der Temperatur und die druckdichte Durchführung ihrer elektrischen Anschlüsse aus dem Druckmedium heraus schwierig.

Die am weitesten verbreitete Methode der Druckerfassung verwendet daher zur Signalgewinnung zunächst eine dünne Membran als mechanische Zwischenstufe, die einseitig dem Druck ausgesetzt ist und sich unter dessen Einfluss mehr oder weniger durchbiegt. Sie kann in weiten Grenzen nach Dicke und Durchmesser dem jeweiligen Druckbereich angepasst werden. Niedrige Druckmessbereiche führen zu vergleichsweise großen Membranen mit Durchbiegungen, die im Bereich von 0,1 bis 1 mm liegen können. Hohe Drücke erfordern jedoch dickere Membranen geringen Durchmessers, die sich meist nur wenige Mikrometer durchbiegen. Derartige Drucksensoren sind beispielsweise in Konrad Reif (Hrsg.): Sensoren im Kraftfahrzeug, 1. Auflage, 2010, S. 80-82 und S. 134-136 beschrieben.

Insbesondere sind mikromechanische Halbleiter-Drucksensoren bekannt, die einen Rahmen aus einem Halbleitersubstrat und eine auf dem Rahmen angeordnete Membran aufweisen. Auf der Membran sind dabei verschiedene piezoresistive Messwiderstände angebracht, die bei einer Deformation der Membran bzw. der Widerstände ihren Widerstandswert ändern. Die piezoresistiven Messwiderstände sind dabei üblicherweise auf der dem druckbeaufschlagten Medium abgewandten Seite der Membran angeordnet, wie beispielsweise der DE 10 2007 052 364 A1 oder DE 10 2004 006 199 A1 entnehmbar ist.

Die DE 10 2004 006 199 A1 beschreibt eine Drucksensoranordnung, die als Sensorelement einen mikromechanischen Sensorchip mit einer Membran umfasst, wobei die Membran eine Kaverne in der Chiprückseite überspannt. Der Sensorchip ist über einen Zwischenträger aus natriumhaltigem Glas auf einem metallischen Gehäusesockel montiert. Über eine Druckzuführung im Gehäusesockel, die sich auch durch den Glasträger erstreckt und in die Kaverne des Sensorchips mündet, wird die Membran mit dem zu erfassenden Druck beaufschlagt.

Die DE 10 2007 052 364 A1 beschreibt eine Drucksensoranordnung mit mindestens einem Sensorchip als Sensorelement, der über mindestens einen Zwischenträger auf einem Gehäusesockel montiert ist, wobei das Halbleitermaterial des Sensorchips und das Material des Gehäusesockels unterschiedliche thermische Ausdehnungskoeffizienten haben. Mindestens ein Zwischenträger in Form eines Keramikträgers wird realisiert, dessen thermischer Ausdehnungskoeffizient einem thermischen Ausdehnungskoeffizienten des Halbleitermaterials des Sensorchips angepasst ist.

Auch sind Drucksensoren bekannt, bei denen das Sensorelement in einer Messzelle aufgenommen ist. Die Messzelle verfügt über eine Trennmembran mit interner Ölvorlage. Während der Messung erzeugt das druckbeaufschlagte Medium einen Druck, der über die Trennmembran und die interne Ölvorlage auf das Sensorelement übertragen wird.

Die DE 101 28 010 A1 beschreibt eine Drucksensoranordnung, bei der ein Messaufnehmer als Sensorelement in einem Träger integriert ist und mit einer Auswerteschaltung berührungslos energetisch verbunden ist. Insbesondere wird beschrieben, dass sich der Messaufnehmer in einem Reifen eines Kraftfahrzeugs und sich die Auswerteschaltung im Innenraum des Kraftfahrzeugs befinden kann. Der Messaufnehmer und die Auswerteschaltung sind entsprechend an verschiedenen, räumlich getrennten Bauteilen angeordnet. Weitere Drucksensoranordnungen aus dem Stand der Technik werden in WO2006/134151 und US5181423 offenbart. Trotz der zahlreichen Vorteile der aus dem Stand der Technik bekannten Drucksensoranordnungen beinhalten diese noch Verbesserungspotential. So ist beispielsweise die Verwendung der Silizium-Mikromechanik für das Sensorelement und ein Schutz durch eine Ölvorlage relativ aufwändig und hat den Nachteil, dass die Robustheit der Sensoranordnung begrenzt ist. Ferner wird in anderen Strategien angestrebt, Druck auf die Membranrückseite, d.h. den Bereich der Membran, der dem zu druckbeaufschlagten Medium abgewandt ist, bei der Silizium-Mikromechanik auszuüben. Aufgrund der Festigkeit des üblichen Glassockels kommt es jedoch zu einer Begrenzung durch den Berstdruck, so dass diese Drucksensoranordnung für Drücke oberhalb 100 bar nicht mehr geeignet ist. Drucksensoren mit Metallmembranen bringen hohe Genauigkeitsanforderungen bei sehr dünnen Membranen mit sich. Derartige dünne Membranen sind sehr aufwändig in der Gestaltung und beim Verbindungs- bzw. Montageprozess kann es zu Verspannungen kommen, so dass eine genaue Druckmessung nicht mehr möglich wird. Dies gilt gleichermaßen für keramische Membrankörper. Bei diesen besteht insbesondere das Problem der Dichtheit gegenüber dem zu messenden Medium über die Lebensdauer, so dass deren Einsatzbereich auf ungefähr 200 bar begrenzt ist. Insbesondere bei der Bestimmung von hohen Drücken im Bereich von mehr als 200 bar liegen aufgrund der erforderlichen Materialfestigkeit nur sehr geringe Verformungen der Membran vor, so dass entsprechend auch nur kleine Signale ausgegeben werden. Diese müssen daher verstärkt werden. Bei Ungenauigkeiten in der Materialanfertigung kommt es daher zu Messfehlern und es werden daher auch die Messfehler entsprechend verstärkt bzw. vergrößert, so dass die Druckbestimmung mit zunehmendem Druck ungenauer werden kann. Das heißt, dass für die Messung bei Hochdruckanwendungen ein geeigneter Schichtaufbau sowie sehr hohe geometrische Toleranzanforderungen an das Sensorelement erforderlich sind. Zusätzlich sind die elektrischen Signale sehr klein, so dass eine große elektrische Verstärkung für die Verarbeitung und Ausgabe notwendig ist. Diese Verstärkung erfolgt für das Nutzsignal und Störgrößen gleichermaßen.

### Offenbarung der Erfindung

Es wird daher eine Drucksensoranordnung vorgeschlagen, welche die Nachteile bekannter Drucksensoren zumindest weitgehend vermeidet und die über einen größeren Druckbereich anwendbar ist.

Die Erfindung ist grundsätzlich zum Erfassen eines Drucks an jedem Einsatzort geeignet, insbesondere im Bereich der in einem Kraftfahrzeug zu messenden Drücke.

Ein Gedanke der Erfindung besteht darin, das Sensorelement ohne direkte elektrische Verbindungskontakte über eine Spulenanordnung berührungslos energetisch, wie beispielsweise induktiv und/oder kapazitiv, an eine Auswerteschaltung anzukoppeln, wobei das Sensorelement direkt in dem zu messenden Druckmedium angeordnet sein kann.

Es wird dementsprechend eine Drucksensoranordnung zur Erfassung eines Drucks eines fluiden Mediums in einem Messraum vorgeschlagen. Daneben können bei entsprechender Integration der jeweiligen Bauteile weitere physikalische und/oder chemische Eigenschaften des fluiden Mediums bestimmt werden, einschließlich beispielsweise einer Temperatur, eines weiteren Drucks, einer Strömungseigenschaft oder einer oder mehrerer anderer Eigenschaften. Bei dem Messraum kann es sich grundsätzlich um einen beliebigen Raum handeln, in welchem das fluide Medium, also ein Gas und/oder eine Flüssigkeit, ruhend oder strömend aufgenommen ist. Insbesondere kann es sich bei dem Messraum um einen Teil eines Kraftstoffsystems handeln. Die Drucksensoranordnung kann somit insbesondere zur Erfassung eines Kraftstoffdrucks eingesetzt werden oder ausgestaltet sein.

Unter einer berührungslosen energetischen Kopplung wird dabei im Rahmen der vorliegenden Erfindung eine Kopplung verstanden, bei welcher mindestens eine Information, insbesondere mindestens ein Messsignal, berührungslos durch einen Austausch von Energie übertragen wird. Insbesondere kann die berührungslose energetische Kopplung eine berührungslose elektrische Kopplung sein oder umfassen, beispielsweise eine induktive und/oder kapazitive elektrische Kopplung und/oder ein Austausch elektromagnetischer oder magnetischer Signale. Beispielsweise können elektrische Signale in Form von Spannungssignalen und/oder Stromsignalen berührungslos ausgetauscht werden. Der Ausdruck "berührungslos" ist dabei dahingehend zu verstehen, dass der Energieaustausch, insbesondere der Austausch elektrischer Signale, drahtlos erfolgt, also ohne eine direkte elektrisch leitende Verbindung.

Die Sensoranordnung kann mindestens einen in eine Wand des Messraums einbringbaren Druckanschluss umfassen, der als Gewindestutzen ausgebildet sein kann. Der Druckanschluss kann insbesondere mittels eines oder mehrerer Verbindungselemente in der Wand des Messraums fixierbar sein, beispielsweise mittels mindestens eines Außengewindes, das in ein Innengewinde der Wand des Messraums greift. Auch andere Fixierungen sind jedoch grundsätzlich alternativ oder zusätzlich möglich. Die Fixierung kann insbesondere druckdicht und/oder mediendicht erfolgen.

Eine erfindungsgemäße Drucksensoranordnung umfasst ein Sensorgehäuse, mindestens ein Sensorelement, das auf einem Träger so angeordnet ist, dass es zum Messen eines Drucks des Mediums dem Medium aussetzbar ist, und eine Auswerteschaltung zum Ausgeben eines Signals, das den auf das Sensorelement wirkenden Druck anzeigt, wobei die Auswerteschaltung außerhalb des Mediums angeordnet ist und mit dem Sensorelement berührungslos energetisch verbunden ist, wobei der Träger mit dem Sensorgehäuse derart verbunden ist, dass sich die Auswerteschaltung innerhalb des Sensorgehäuses befindet. Unter einem Sensorgehäuse ist dabei ein Gehäuse zu verstehen, dass die Auswerteschaltung vollständig oder teilweise umgibt bzw. aufnimmt. Es ist jedoch auch möglich, dass sich die Auswerteschaltung teilweise außerhalb des Sensorgehäuses befindet. Grundsätzlich ist dabei jedes Bauteil zu verstehen, das die Auswerteschaltung gegenüber dem Medium abtrennt und gegen äußere Einflüsse schützt.

Dabei können die Versorgung des Sensorelements mit elektrischer Spannung und das Auslesen des Sensorelements durch beispielsweise eine induktive Verbindung erfolgen. Durch die erfindungsgemäße Drucksensoranordnung können elektrische Verbindungselemente, wie beispielsweise Bonddrähte, von dem Sensorelement zu der Auswerteschaltung entfallen. Derartige Verbindungselemente sind üblicherweise empfindlich, insbesondere druckempfindlich. Ferner könnten derartige Verbindungselemente bei einem Aussetzen gegenüber dem Medium korrodieren und/oder mechanische Beschädigungen, beispielsweise aufgrund des Drucks, erfahren. Bei der erfindungsgemäßen Drucksensoranordnung muss keine Durchkontaktierung durch das Medium hindurch erfolgen und daher auch keine Abdichtung dafür vorgesehen werden. Das Sensorelement der erfindungsgemäßen Drucksensoranordnung kann passiviert sein, so dass es keine elektrischen und/oder mechanischen Angriffspunkte für das Medium bietet. Derartige Passivierschichten können beispielsweise Silizium-Nitrit, Silizium-Karbid oder dergleichen umfassen. Durch die erfindungsgemäße Drucksensoranordnung kann vor allem gegenüber aus Kunststoffen ausgebildeten Sensorgehäusen und anderen daraus gefertigten Bauteilen von Drucksensoranordnungen aus dem Stand der Technik eine gesteigerte Medienrobustheit erzielt werden, da keine elektrischen Verbindungen und andere empfindliche Bauteile abgedichtet werden müssen. Gleichermaßen lässt sich auch die Temperaturbeständigkeit vor allem gegenüber aus Kunststoffen ausgebildeten Sensorgehäusen und anderen daraus gefertigten Bauteilen von Drucksensoranordnungen aus dem Stand der Technik erhöhen. Die erfindungsgemäßen Drucksensoranordnungen können ebenfalls ein aus Kunststoff ausgebildetes Gehäuse aufweisen und dennoch für Drücke größer 10 bar geeignet sein, da keine direkten elektrischen Verbindungen vorgesehen werden müssen, die abzudichten wären. Entsprechend lässt sich das Sensorelement für jeden zu erwartenden Druckbereich separat bzw. individuell auslegen. Insbesondere können exakte Membranen in einem weiten Druckbereich eingestellt werden.

Der Träger kann aus einem elektrisch nicht leitfähigen Material ausgebildet sein. Dies kann beispielsweise ein keramisches Material sein. Dadurch wird eine ungestörte elektrische und berührungslose Verbindung zwischen der Auswerteschaltung und dem Sensorelement erreicht.

Der Träger kann für magnetische Felder durchlässig sein. Dies ist insbesondere bei einer induktiven Verbindung zwischen der Auswerteschaltung und dem Sensorelement relevant, damit eine ungestörte elektrische Spannung in der Auswerteschaltung induziert werden kann.

Die Drucksensoranordnung kann ferner einen Druckanschluss umfassen, mit dem der Träger des Sensorelements gegenüber dem Medium abgedichtet verbunden ist. Ein derartiger Druckanschluss dient zum Anbringen bzw. Befestigen der Drucksensoranordnung an beispielsweise einer Wand des Messraums. Durch die mediendichte Verbindung zwischen dem Träger und dem Druckanschluss ist die Auswerteschaltung vor dem Medium geschützt.

Der Träger kann beispielsweise ganz oder teilweise aus einem keramischen Material hergestellt sein. Der Druckanschluss kann insbesondere ganz oder teilweise aus einem Metall oder einer Metallverbindung hergestellt sein, beispielsweise aus Stahl. Dadurch kann eine besonders robuste Drucksensoranordnung geschaffen werden, die dennoch eine ungestörte elektrische und berührungslose Verbindung zwischen der Auswerteschaltung und dem Sensorelement ermöglicht. Zur Verbindung eines keramischen Trägers mit einem metallischen Druckanschluss können beispielsweise eine oder mehrere der folgenden Techniken zum Einsatz kommen: Eine Lötverbindung; eine Schweißverbindung, eine Klebeverbindung. Eine Verbindung kann beispielsweise auch dadurch hergestellt und/oder begünstigt werden, dass der keramische Träger vor dem Verbinden mit dem metallischen Druckanschluss ganz oder teilweise metallisiert wird, beispielsweise indem mindestens eine Metallschicht auf diesen aufgebracht wird, beispielsweise eine Nickelschicht und/oder eine Goldschicht und/oder eine Silberschicht. Anschließend kann beispielsweise ein Verlöten mit dem Druckanschluss erfolgen.

Bei einer Lötverbindung wird beispielsweise auf den metallischen Druckanschluss mit einer definierten Dicke und/oder Stärke eine Lotpaste gedruckt und/oder dispensiert oder eine Lotscheibe oder ein Lotplättchen postioniert oder angeordnet. Anschließend wird der keramische Träger positioniert, d.h. in seine Schlussposition relativ zu dem Druckanschluss gebracht, und durch einen Temperaturschritt auf eine Temperatur oberhalb der Schmelztemperatur des Lotes erwärmt. Die Erwärmung kann beispielsweise durch einen Standardofenprozess des gesamten Bauteiles oder durch eine lokale Erwärmung des Druckanschlusses mit Lot und keramischen Träger durch Induktion oder defokusierten Laserstrahl erfolgen. Hierbei ist die geringere Schmelztemperatur des Lotes im Vergleich zu den übrigen Bauteilen hervorzuheben. Nur das Lot wird daher in den flüssigen Aggregatzustand überführt. Der metallische Druckanschluss und der keramische Träger bleiben im festen Aggregatzustand. Durch den nachfolgenden Abkühlvorgang ist eine mechanische Verbindung gegeben.

Bei einer Schweißverbindung werden beispielsweise der metallische Druckanschluss und der keramische Träger postioniert, d.h. in ihre Schlusspositionen relativ zueinander gebracht. Zwischen dem Druckanschluss und dem keramische Träger kann ein Schweißzusatz vorhanden sein. Anschließend wird durch eine lokale Erwärmung der Verbindungstelle zwischen dem Druckanschluss mit dem keramischen Träger durch einen Laserstrahl so erwärmt, dass beide Stoffe im Grenzbereich zueinander in flüssigem Aggregatzustand übergehen und ein Stoffvermischung und/oder -diffusion eintritt. Der Schweißzusatz kann hierbei als thermische Zwischenschicht auch als Ausgleich der Schmelztemperturen dienen. Durch den nachfolgenden Abkühlvorgang ist eine mechanische Verbindung gegeben. Der Abkühlvorgang ist kontrolliert zu steuern, um mechanische Spannungen zwischen den beiden Werkstoffen zu minimieren.

Die Drucksensoranordnung kann ferner einen Gehäusesockel umfassen, der an einem Ende des Druckanschlusses angeordnet sein kann, wobei der Träger des Sensorelements derart an dem Druckanschluss vorgesehen sein kann, dass der Träger aus einer Ebene des Gehäusesockels vorsteht oder sich in einer Ebene des Gehäusesockels befindet. Dadurch kann das Sensorgehäuse besonders einfach auf dem Gehäusesockel vorgesehen sein und die Auswerteschaltung vor äußeren Einflüssen schützen.

Die Auswerteschaltung kann direkt an dem Träger des Sensorelements angeordnet sein. Dadurch kann der Abstand zwischen dem Sensorelement und der Auswerteschaltung möglichst kurz gehalten werden, so dass die Wahrscheinlichkeit einer Störung der elektrischen Verbindung zwischen diesen minimiert werden kann.

In dem Sensorgehäuse kann sich ein weiteres druckbeaufschlagtes Medium befinden, so dass auf den Träger des Sensorelements ein Gegendruck aufbringbar ist und die Drucksensoranordnung für eine Differenzdruckmessung ausgebildet ist. Dadurch lassen sich die oben beschriebenen Vorteile auch bei einer Anwendung zur Messung von Differenzdrücken erzielen.

Ein Verfahren zum Herstellen einer derartigen Drucksensoranordnung kann die folgenden Schritte umfassen, vorzugsweise in der angegebenen Reihenfolge:
- Anbringen eines Sensorelements an einem Träger, insbesondere durch Löten, Aufglasen oder Kleben, derart, dass es zum Messen eines Drucks eines Mediums dem Medium aussetzbar ist,
- Vorsehen einer Auswerteschaltung zum Ausgeben eines Signals, das den auf das Sensorelement wirkenden Druck anzeigt, wobei die Auswerteschaltung außerhalb des Mediums angeordnet wird und mit dem Sensorelement berührungslos energetisch verbunden wird,
- Vorsehen eines Sensorgehäuses, wobei
- der Träger mit dem Sensorgehäuse derart verbunden wird, dass sich die Auswerteschaltung innerhalb des Sensorgehäuses befindet.

Ferner kann ein Druckanschluss vorgesehen werden, insbesondere ein Druckanschluss aus Metall, der Träger des Sensorelements kann insbesondere aus einem keramischen Material sein und gegenüber dem Medium abgedichtet mit dem Druckanschluss verbunden werden, insbesondere durch Löten oder Schweißen.

Zusammenfassend lässt sich sagen, dass das Sensorelement durch Löten, Kleben, Aufglasen auf eine Keramik aufbringbar ist. Durch die mediendichte Verbindung zwischen Stahl und Keramik ist der Elektronikraum vor dem Messmedium geschützt. Es besteht auch keine Durchkontaktierung, die abzudichten wäre. Daher liegt eine gesteigerte Medienrobustheit, vor allem gegenüber aus Kunststoffen aufgebauten Sensoren, vor. Ferner wird die Temperaturbeständigkeit erhöht, vor allem gegenüber Kunststoffen, und sind erweiterte Druckbereiche oberhalb 10 bar möglich.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Schnittansicht einer Drucksensoranordnung gemäß einer ersten Ausführungsform;
- Figur 2: eine Schnittansicht einer Drucksensoranordnung gemäß einer zweiten Ausführungsform;
- Figur 3: eine Schnittansicht einer Drucksensoranordnung gemäß einer dritten Ausführungsform
- Figur 4: eine Schnittansicht einer Drucksensoranordnung gemäß einer vierten Ausführungsform;
- Figur 5: eine Schnittansicht einer Drucksensoranordnung gemäß einer fünften Ausführungsform;
- Figur 6: eine Schnittansicht einer Drucksensoranordnung gemäß einer sechsten Ausführungsform;
- Figur 7: eine Schnittansicht einer Drucksensoranordnung gemäß einer siebten Ausführungsform;
- Figur 8: eine Schnittansicht einer Drucksensoranordnung gemäß einer achten Ausführungsform; und
- Figur 9: eine Schnittansicht einer Drucksensoranordnung gemäß einer neunten Ausführungsform.

### Ausführungsformen der Erfindung

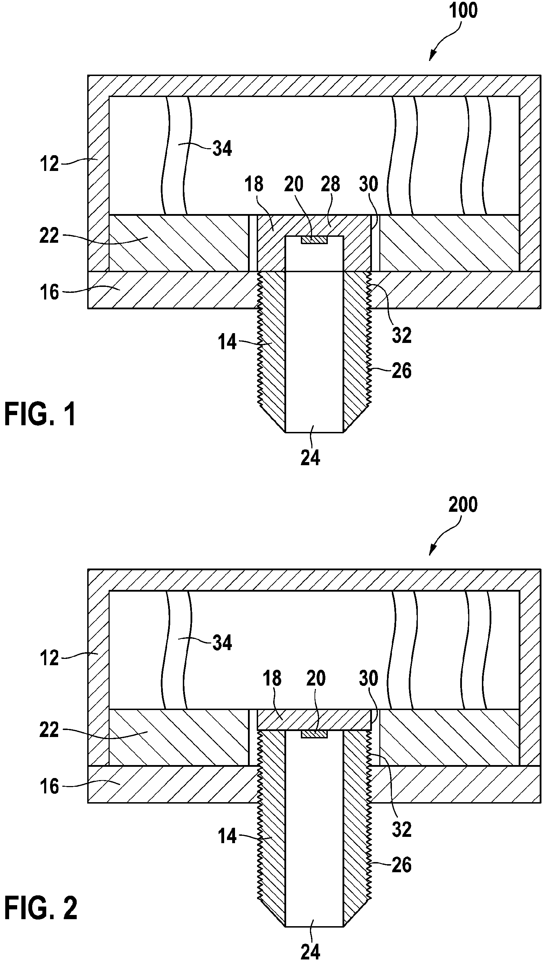

In Fig. 1 ist eine erste beispielhafte Ausführungsform einer erfindungsgemäßen Drucksensoranordnung 100 gezeigt. Die Drucksensoranordnung 100 umfasst ein Sensorgehäuse 12, einen Druckanschluss 14, einen Gehäusesockel 16 in Form eines Sechskants, einen Träger 18, ein Sensorelement 20 und eine Leiterplatte 22 mit einer nicht näher gezeigten Auswerteschaltung. Der Druckanschluss 14 ist als Gewindestutzen ausgebildet und ein im Wesentlichen zylindrisches Bauteil, das eine Öffnung 24 für das zu messende druckbeaufschlagte Medium in einem nicht gezeigten Messraum, wie beispielsweise einer Kraftstoffleitung, und ein Außengewinde 26 aufweist. Der Träger 18 ist becherförmig ausgebildet und ist aus einem elektrisch nicht leitenden, aber für ein Magnetfeld durchlässigen Material ausgebildet. Dies kann beispielsweise ein keramisches Material sein. Auf einer Innenseite des Bodenbereichs 28 der Becherform des Trägers 18 ist das Sensorelement 20 mittels Löten, Aufglasen oder Kleben an dem Träger 18 befestigt. Die Details des Sensorelements 20 werden später ausführlich beschrieben. Der Träger 18 ist derart an dem Druckanschluss 14 befestigt, beispielsweise durch Verschweißen, Löten oder Verkleben, dass das Sensorelement 20 der Öffnung 24 in dem Druckanschluss 14 zugewandt ist. Ist der Träger 18 aus einem keramischen Material, kann dieser wenigstens bereichsweise eine metallisierte Oberfläche in dem Bereich aufweisen, in dem die Verbindung herzustellen ist, um mit dem Druckanschluss 14 durch Schweißen oder Löten verbunden zu werden. Die Wandbereiche 30 der Becherform des Trägers 18 schließen dabei bündig mit den Wandbereichen 32 des Druckanschlusses 14 ab. Dadurch kann das druckbeaufschlagte Medium aus dem Messraum direkt auf das Sensorelement 20 wirken. Durch die besondere Art der Befestigung des Sensorelements 20 an dem Träger 18 ist das Sensorelement 20 abgedichtet gegenüber dem zu messenden Medium an dem Träger 18 befestigt, d.h. das Medium kann nicht zwischen den Träger 18 und das Sensorelement 20 gelangen. Ebenfalls ist durch die oben beschriebene Befestigungsmethode eine derartige dichte Verbindung zwischen dem Träger 18 und dem Druckanschluss 14 vorgesehen. Das Sensorelement 20 kann zur Stressentkopplung über einen Glasträger auf dem Träger montiert sein. Dazu kann beispielsweise ein elastischer Kleber verwendet werden. Dieser kann auch zur thermischen Entkopplung dienen.

An dem Druckanschluss 14 ist der sechskantförmige Gehäusesockel 16 derart durch einen Schweißprozess befestigt, dass der Träger 18 aus der Ebene des Gehäusesockels 16 vorsteht. Der sechskantförmige Gehäusesockel 16 dient als Angriffsfläche für ein Werkzeug, beispielsweise für einen Schraubenschlüssel, um den Druckanschluss 14 in eine Wand des Messraums mittels des Außengewindes 26 einzuschrauben, in dem sich das zu messende druckbeaufschlagte Medium befindet. Alternativ kann der Druckanschluss 14 ein Innengewinde aufweisen, das eingerichtet ist, in ein entsprechendes Außengewinde einer Wand des Messraums zu greifen und eingebracht zu werden.

Die Leiterplatte 22 mit der Auswerteschaltung ist koaxial zu dem Träger 18 auf dem Gehäusesockel 16 angeordnet, wobei sich eine Aussparung rund um den Träger 18 befindet. An der Aussparung befinden sich nicht gezeigte Spulenelemente oben und/oder unten auf der Leiterplatte 22. Der Träger 18 befindet sich daher in der Ebene der Leiterplatte 22 und ist somit von dieser in Umfangsrichtung umgeben. Die Details der Auswerteschaltung werden später ausführlich beschrieben. Ferner ist das Gehäuse auf dem Gehäusesockel 16 derart angeordnet, dass die Leiterplatte 22 und der Träger 18 darin aufgenommen sind. Signale der Leiterplatte 22 können beispielsweise über S-Federn 34 zu einem nicht gezeigten Anschlussstecker der Drucksensoranordnung 100 geleitet werden. Durch die besondere Art der Befestigung des Trägers 18 an dem Druckanschluss 14 kann das Medium nicht in das Innere des Sensorgehäuses 12 gelangen, in dem sich die empfindliche Auswerteschaltung befindet. Weitere Details zu der Verbindung werden im Zusammenhang mit dem erfindungsgemäßen Herstellungsfahren später ausführlich beschrieben.

Nachfolgend wird nun die erfindungsgemäße Signalauswertung der Drucksensoranordnung 100 beschrieben. Die Drucksensoranordnung 100 wird in eine Wand des Messraums, der ein druckbeaufschlagtes Medium enthält, mittels des Außengewindes 26 des Druckanschlusses 14 eingeschraubt. Dadurch kann das Medium in die Öffnung 24 des Druckanschlusses 14 gelangen und auf das Sensorelement 20 wirken. In an sich bekannter Weise wird ein Anschlussstecker einer nicht gezeigten Auswerteeinheit mit einer Druckanzeigevorrichtung mittels der S-Federn 34 mit der Leiterplatte 22 und der Auswerteschaltung verbunden. Das Sensorelement 20 umfasst einen sogenannten LC-Schwingkreis als Messaufnehmer, also einen Kreis, der aus einem Kondensator und einer Spule besteht. Die Spule ist ein induktives Bauteil, das ein seine Induktivität beeinflussendes Material aufweist, das in seiner Induktivitätsbeeinflussungsstärke druckabhängig ist. Entsprechende Fette oder andere hochpermeable Materialien, wie beispielsweise ein Ringkern aus entsprechend geeignetem Ferrit, sind aus dem Stand der Technik bekannt. Bei Änderung des auf den Messaufnehmer wirkenden Drucks ändert sich folglich die Induktivität und damit die Resonanzfrequenz des Schwingkreises. Die Leiterplatte 22 mit der Auswerteschaltung umfasst einen Oszillator zur Anregung des Schwingkreises über die Spulenelemente der Auswerteschaltung. Da der Träger 18 für ein Magnetfeld durchlässig ist, sind das Sensorelement 20 und der Oszillator entsprechend berührungslos energetisch, insbesondere induktiv und/oder kapazitiv gekoppelt. Ferner umfasst die Auswerteschaltung eine Durchstimmeinrichtung zur frequenzmäßigen Durchstimmung des Oszillators und kann ein Signal bereitstellen, das proportional zu dem auf das Sensorelement 20 wirkenden Druck ist. Die Durchstimmeinrichtung kann manuell oder automatisch betrieben werden. Wenn die aktuelle Oszillatorfrequenz mit der Resonanzfrequenz des Messaufnehmers des Sensorelements 20 übereinstimmt, ist die Dämpfung des Oszillators deutlich höher als bei Nichtübereinstimmung der beiden letztgenannten Frequenzen. Die starke Dämpfung im Resonanzfall führt zu einer deutlichen Verringerung der am Ausgang der Auswerteschaltung bereitgestellten Spannung. Somit steht die Resonanzfrequenz des Schwingkreises des Sensorelements 20 und damit die am Ausgang der Auswerteschaltung bereitgestellte Spannung in ihrem Frequenzgang in Abhängigkeit zu der vom Sensorelement zu detektierenden äußeren Größe, nämlich zur Größe des auf das Sensorelement 20 wirkenden Drucks. Entsprechend kann der auf das Sensorelement 20 wirkende Druck ohne direkte elektrische Verbindung mit der Auswerteschaltung erfasst werden. Durch die besondere Anordnung wird daher das Problem der Durchkontaktierung vermieden. Insbesondere können dadurch gegenüber dem Medium robustere Materialien eingesetzt werden. Diese können in Abhängigkeit von der besonderen Anwendung der Drucksensoranordnung 100 Metalle, Metallverbindungen, deren Legierungen oder sogar Kunststoffe sein. Ferner wird durch die besondere Anordnung die Temperaturbeständigkeit erhöht und der zu messende Druck kann in einem größeren Bereich erfasst bzw. bestimmt werden. Dies ist insbesondere im Kraftfahrzeugbereich von Interesse, wo beispielsweise in der Common Rail eines Dieselmotors Drücke bis 2000 bar vorherrschen.

In Fig. 2 ist eine zweite Ausführungsform einer erfindungsgemäßen Drucksensoranordnung 200 gezeigt. Nachstehend werden nur die Unterschiede zu der ersten Ausführungsform beschrieben. Insbesondere sind gleiche Bauteile mit gleichen Bezugszeichen versehen.

Bei der in Fig. 2 gezeigten Drucksensoranordnung 200 ist der Träger 18 des Sensorelements 20 scheibenförmig ausgebildet. Der Gehäusesockel 16 ist derart an dem Druckanschluss 14 angeordnet, dass der Druckanschluss 14 aus der Ebene des Gehäusesockels 16 ein Stück in Richtung zu dem Sensorgehäuse 12 vorsteht. Der Träger 18 befindet sich in der Ebene der Leiterplatte 22 mit der Auswerteschaltung und wird von dieser in Umfangsrichtung umgeben. Das bezüglich der ersten Ausführungsform beschriebene Messprinzip zur Druckerfassung ist das gleiche.

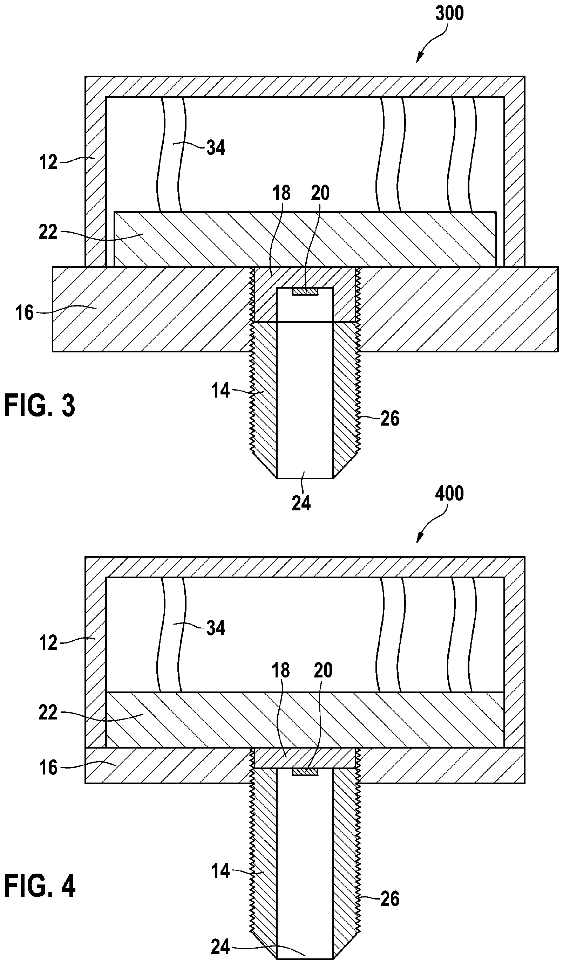

In Fig. 3 ist eine dritte Ausführungsform einer erfindungsgemäßen Drucksensoranordnung 300 gezeigt. Nachstehend werden nur die Unterschiede zu der ersten bzw. zweiten Ausführungsform beschrieben. Insbesondere sind gleiche Bauteile mit gleichen Bezugszeichen versehen.

Bei der in Fig. 3 gezeigten Drucksensoranordnung 300 ist der Träger 18 des Sensorelements 20 wie bei der ersten Ausführungsform becherförmig ausgebildet. Der Gehäusesockel 16 ist an dem Druckanschluss 14 derart befestigt, dass sich der Träger 18 in der Ebene des Gehäusesockels 16 befindet und mit diesem fluchtet. Die Leiterplatte 22 mit der Auswerteschaltung ist auf dem Gehäusesockel 16 derart angebracht, dass sie flächig über dem Träger 18 bzw. dem Sensorelement 20 angeordnet ist, das heißt, eine Außenseite des Bodenbereichs der Becherform des Trägers 18 ist ebenfalls von der Leiterplatte 22 bedeckt. Die Spulenelemente der Auswerteschaltung befinden sich oben oder unten auf der Leiterplatte 22 oberhalb des Sensorelements 20. Das Messprinzip der Druckerfassung ist im Übrigen das gleiche wie bezüglich der ersten Ausführungsform beschrieben.

In Fig. 4 ist eine vierte Ausführungsform einer erfindungsgemäßen Drucksensoranordnung 400 gezeigt. Nachstehend werden nur die Unterschiede zu den vorherigen Ausführungsformen beschrieben. Insbesondere sind gleiche Bauteile mit gleichen Bezugszeichen versehen.

Bei der in Fig. 4 gezeigten Drucksensoranordnung 400 ist der Träger 18 wie bei der zweiten Ausführungsform scheibenförmig ausgebildet. Wie bei der dritten Ausführungsform ist der Gehäusesockel 16 derart an dem Druckanschluss 14 angeordnet bzw. befestigt, dass sich der Träger 18 in der Ebene des Gehäusesockels 16 befindet und mit diesem fluchtet. Auch hier ist die Leiterplatte 22 wie bei der dritten Ausführungsform auf dem Gehäusesockel 16 angeordnet, dass sie flächig über dem Träger 18 angeordnet ist. Die Anordnung der Spulenelemente ist die gleiche wie bei der dritten Ausführungsform. Das Messprinzip der Druckerfassung ist im Übrigen das gleiche wie bezüglich der ersten Ausführungsform beschrieben.

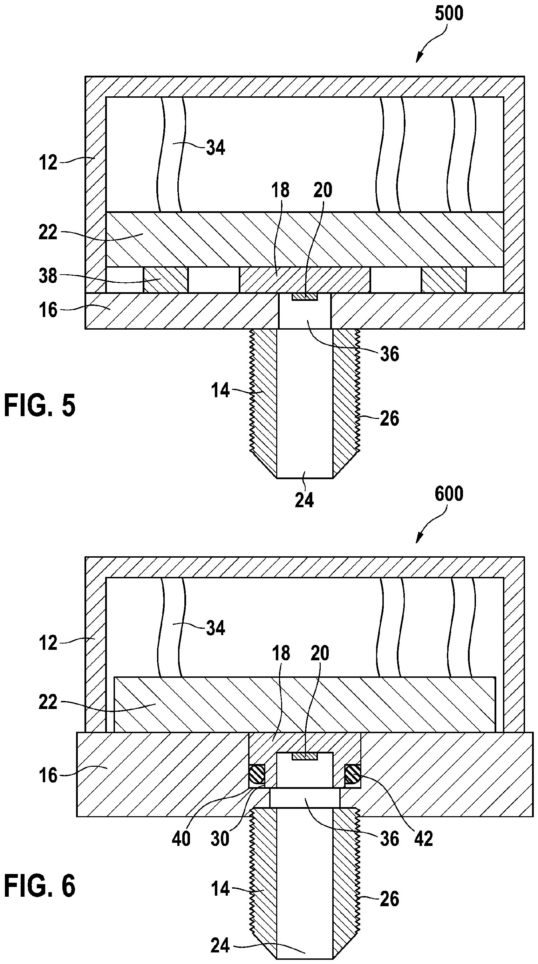

In Fig. 5 ist eine fünfte Ausführungsform einer erfindungsgemäßen Drucksensoranordnung 500 gezeigt. Nachstehend werden nur die Unterschiede zu den vorherigen Ausführungsformen beschrieben. Insbesondere sind gleiche Bauteile mit gleichen Bezugszeichen versehen.

Bei der in Fig. 5 gezeigten Drucksensoranordnung 500 ist der Träger 18 des Sensorelements 20 scheibenförmig ausgebildet. Der Gehäusesockel 16 weist in seinem mittleren Bereich eine Öffnung 36 auf, die koaxial zu bzw. bündig mit der Öffnung 24 in dem Druckanschluss 14 ausgebildet ist. Der Träger 18 des Sensorelements 20 ist an dem Gehäusesockel 16 und nicht an dem Druckanschluss 14 befestigt und befindet sich auf der dem Sensorgehäuse 12 zugewandten Seite des Gehäusesockels 16. Daher ist der Träger 18 indirekt über den Gehäusesockel 16 an dem Druckanschluss 14 befestigt. Auf der dem Sensorgehäuse 12 zugewandten Seite des Gehäusesockels 16 befindet sich ein ringförmiger Zwischenträger 38, der koaxial zu dem Träger 18 des Sensorelements 20 angeordnet ist. Auf diesem Zwischenträger 18 ist die Leiterplatte 22 mit der Auswerteschaltung angeordnet und überspannt bzw. bedeckt den Träger 18. Die Spulenelemente der Auswerteschaltung befinden sich oben oder unten auf der Leiterplatte 22 oberhalb des Sensorelements 20. Das Messprinzip der Druckerfassung ist im Übrigen das gleiche wie bezüglich der ersten Ausführungsform beschrieben.

In Fig. 6 ist eine sechste Ausführungsform einer erfindungsgemäßen Drucksensoranordnung 600 gezeigt. Nachfolgend werden nur die Unterschiede zu den vorherigen Ausführungsformen beschrieben. Insbesondere sind gleiche Bauteile mit gleichen Bezugszeichen versehen.

Bei der in Fig. 6 gezeigten Drucksensoranordnung 600 ist der Träger 18 des Sensorelements 20 becherförmig ausgebildet, wobei er an dem freien Ende seiner Außenwand eine Aussparung aufweist. Der Gehäusesockel 16 weist in seinem mittleren Bereich eine Vertiefung bzw. Aussparung 40 mit einer Öffnung 36 wie bei der vorherigen Ausführungsform auf, die koaxial zu bzw. bündig mit der Öffnung in dem Druckanschluss 14 ausgebildet ist. Der Träger 18 des Sensorelements 20 ist nicht an den Druckanschluss 14, sondern in der Vertiefung des Gehäusesockels 16 derart angeordnet, dass er sich in der Ebene des Gehäusesockels 16 befindet und mit diesem fluchtet. Die Aussparung 40 im Bereich der Außenwand des becherförmigen Trägers 18 dient der Aufnahme einer Dichtung 42, wie beispielsweise eines O-Rings, die zwischen dem Wandbereich 30 des Trägers 18 und der Aussparung 40 des Gehäusesockels 16 angeordnet ist. Die Leiterplatte 22 mit der Auswerteschaltung ist auf dem Gehäusesockel 16 derart angeordnet, dass sie den Träger 18 flächig bedeckt. Die Spulenelemente der Auswerteschaltung befinden sich oben oder unten auf der Leiterplatte 22 oberhalb des Sensorelements 20. Das Messprinzip der Druckerfassung ist im Übrigen das gleiche wie bezüglich der ersten Ausführungsform beschrieben.

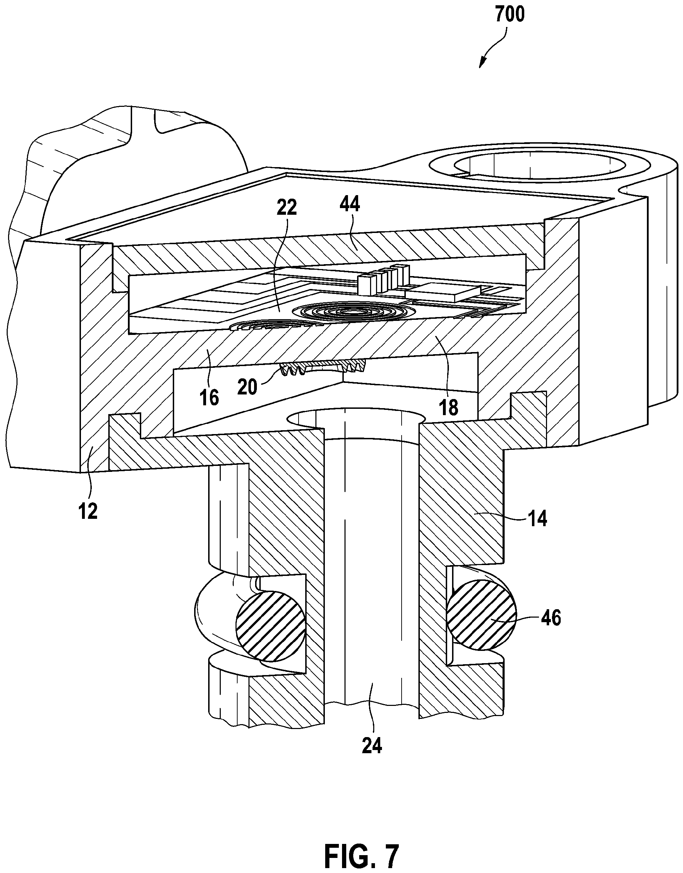

In Fig. 7 ist eine siebte Ausführungsform einer erfindungsgemäßen Drucksensoranordnung 700 gezeigt. Nachfolgend werden nur die Unterschiede zu den vorherigen Ausführungsformen beschrieben. Insbesondere sind gleiche Bauteile mit gleichen Bezugszeichen versehen.

Bei der in Fig. 7 gezeigten Drucksensoranordnung 700 ist das Sensorgehäuse 12 aus Kunststoff ausgebildet. Insbesondere sind der Gehäusesockel 16 und das Sensorgehäuse 12 integral ausgebildet. Nachfolgend wird die Kombination bzw. der Verbund dieser zwei Bauteile als Sensorgehäuse 12 bezeichnet. Dabei kann das Sensorgehäuse 12 aus einer Grundplatte mit Wänden bestehen. Die Grundplatte dient als Träger 18 des Sensorelements 20. Die Grundplatte weist innen, d.h. innerhalb der Wände und auf der Seite, die zu der Leiterplatte 22 mit der Auswerteschaltung zeigt, den Träger 18 des Sensorelements 20 auf und auf der Außenseite, d.h. der Seite, an der sich keine Wände befinden und die dem Druckmedium zugewandt ist, nimmt die Grundplatte das Sensorelement 20 auf. Das Sensorgehäuse 12 weist in seinem oberen Bereich der Wände, d.h. dem von der Leiterplatte 22 abgewandten Bereich eine Öffnung auf. An dieses Sensorgehäuse 12 kann der Druckanschluss 14 beispielsweise über Laser- oder Ultraschallschweißen befestigt werden. Nach Montage der Elektronikbauteile im Inneren des Sensorgehäuses 12 und Durchführung eines Abgleichs zur Einstellung einer Kennlinie für den Druck und der Temperaturkompensation, wird die Öffnung des Sensorgehäuses 12 mit einem Deckel 44 verschlossen. Die Anbindung des Drucks kann dabei entweder über eine Dichtung 46, wie beispielsweise einen O-Ring in einer Bohrung bzw. Nut, oder durch Anschluss eines Schlauches im Bereich des Druckanschlusses 14 erfolgen. Das Sensorgehäuse 12 ist für Drücke bis ca. 50 bar geeignet. Das Messprinzip der Druckerfassung ist im Übrigen das gleiche wie bezüglich der ersten Ausführungsform beschrieben.

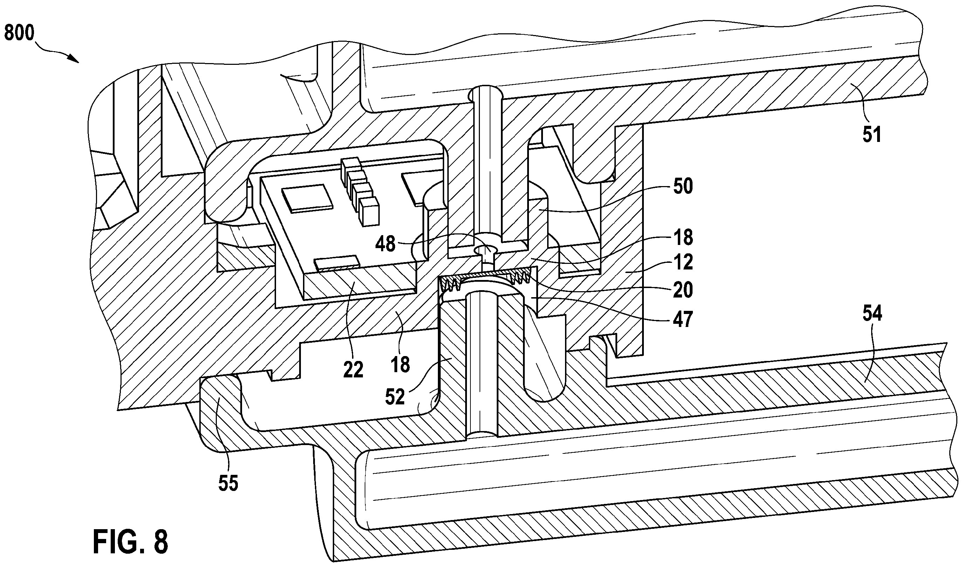

In Fig. 8 ist eine achte Ausführungsform einer erfindungsgemäßen Drucksensoranordnung 800 gezeigt. Nachfolgend werden nur die Unterschiede zu den vorherigen Ausführungsformen beschrieben. Insbesondere sind gleiche Bauteile mit gleichen Bezugszeichen versehen.

Bei der in Fig. 8 gezeigten Drucksensoranordnung 800 ist das Sensorgehäuse 12 wie bei der siebten Ausführungsform aus Kunststoff ausgebildet. Ein derartiges Kunststoffgehäuse kann allerdings beispielsweise für niedrige bis mittlere Differenzdrücke, d.h. Drücke bis 20 bar, umfunktioniert werden. Bei einer Differenzdruckanordnung wird ein zweiter Druck durch das Innere des Sensorgehäuses 12 hindurch erzeugt. Dabei kann das Sensorgehäuse 12 aus einer Grundplatte mit Wänden bestehen. Die Grundplatte dient als Träger 18 des Sensorelements 20. Die Grundplatte weist insbesondere eine kreiszylindrische Vertiefung 47 mit einer zentralen Öffnung 48 auf, die von dem Sensorelement 20 bedeckt wird. Die Leiterplatte 22 ist auf dem Träger 18 die kreiszylindrische Vertiefung 47 umgebend und koaxial zu der Öffnung 48 angeordnet. Die Spulenelemente der Auswerteschaltung sind in diesem Fall daher neben dem Sensorelement 20 bzw. der Vertiefung 47 in dem Träger 18 angeordnet, wobei eine ausreichende Übertragungsleistung dargestellt werden kann. Auf der dem Sensorelement 20 abgewandten Seite der Vertiefung 47 sind koaxial zu der Öffnung 48 integral mit dem Träger 18 ausgebildete Wände 50 angeordnet, die sich von dem Sensorelement 20 weg erstrecken. Auf einer dem Sensorelement 20 abgewandten Seite des Trägers 18 ist das Sensorgehäuse 12 an einem als Druckleitung 51 ausgebildeten Messraum angeordnet und kann, wie in Fig. 8 gezeigt, von der Druckleitung 51 verschlossen sein. Insbesondere ist ein Druckanschluss 14 integral mit der Druckleitung 51 ausgebildet, der so in die Wände 50 eingesetzt sein kann, dass er sich zu dem Träger 18 erstreckt und mit diesem sowohl im Bereich um die Öffnung 48 in dem Träger 18 als auch im Bereich der Wände 50 des Trägers 18 druckdicht bzw. gegenüber dem Medium in der Druckleitung 51 verbunden ist. Dies kann beispielsweise durch Kleben oder Schweißen erfolgen. Auch ist alternativ oder zusätzlich eine Formdichtung zwischen dem Druckanschluss 14 und den Wänden 50 möglich. Der Druckanschluss 14 kann alternativ entfallen und durch eine direkte Anbindung des Träger 18 an die Druckleitung 51 ersetzt sein. Da der Druckanschluss 14 abgedichtet angeordnet ist, kann das Medium aus der Druckleitung 51 nicht in den zwischen der Druckleitung 51 und dem Träger 18 gebildeten Hohlraum des Sensorgehäuses 12, in dem sich die Leiterplatte 22 mit der empfindlichen Auswerteschaltung befindet, gelangen. Die Leiterplatte 22 befindet sich somit innerhalb des Sensorgehäuses 12, das von der Druckleitung 51 auf einer Seite verschlossen wird. Der zu messende erste Druck kann somit durch den Druckanschluss 14 zu dem Sensorelement 20 gelangen. Der zweite Druck wirkt auf die Rückseite des Trägers 18 bzw. des Sensorelements 20. Um dies zu erreichen kann ein Druckstutzen 52 einer Druckleitung 54, die ein druckbeaufschlagtes Medium enthalten kann, von der dem Sensorelement 20 zugewandten Seite des Trägers 18 in die Vertiefung 47 des Trägers 18 hineinragen und in diese eingesetzt sein. Um den Gegendruck auf das Sensorelement 20 zu erzeugen, kann daher das mit dem zweiten Druck druckbeaufschlagte Medium aus der Druckleitung 54 durch den Druckstutzen 52 auf das Sensorelement 20 bzw. dessen Rückseite geführt werden. Insbesondere kann der Druckstutzen 52 entweder direkt mit der Grundplatte des Gehäuses 12 im Bereich der Vertiefung 47 verbunden sein oder die Druckleitung 54 kann, wie in Fig. 8 gezeigt, zumindest einen Flansch 55 aufweisen, der um den Druckstutzen 52 herum angeordnet ist und so mit dem Gehäuse 12 verbunden wird, dass ein mit dem mit dem zweiten Druck druckbeaufschlagte Medium gefüllter Raum zwischen dem Träger 18 und der Druckleitung 54 gebildet wird und das Sensorgehäuse 12 auf der dem Sensorelement 20 zugewandten Seite des Trägers 18 verschlossen wird. Das Messprinzip der Druckerfassung ist im Übrigen das gleiche wie bezüglich der ersten Ausführungsform beschrieben.

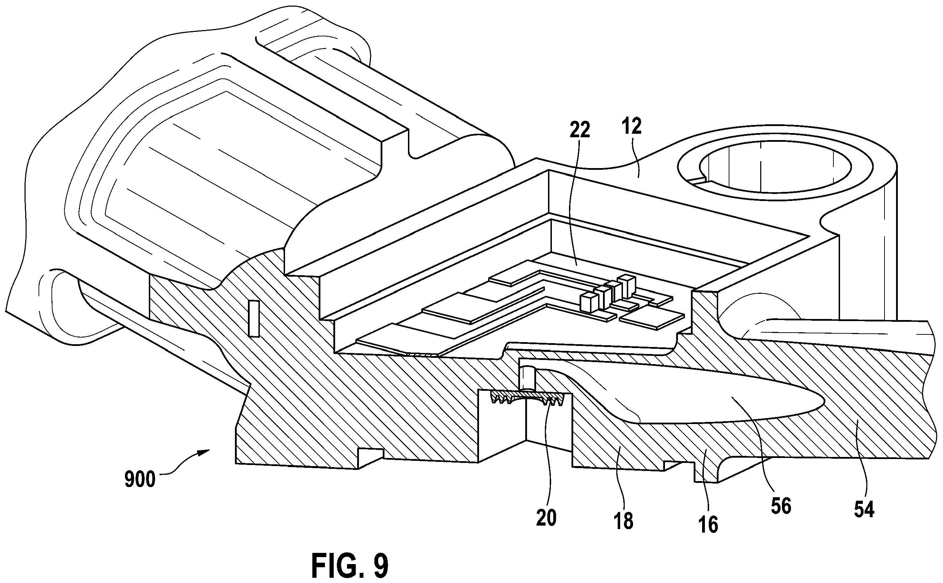

In Fig. 9 ist eine neunte Ausführungsform einer erfindungsgemäßen Drucksensoranordnung 900 gezeigt. Nachfolgend werden nur die Unterschiede zu den vorherigen Ausführungsformen beschrieben. Insbesondere sind gleiche Bauteile mit gleichen Bezugszeichen versehen.

Bei der in Fig. 9 gezeigten Drucksensoranordnung 900 ist das Sensorgehäuse 12 wie bei der siebten bzw. achten Ausführungsform aus Kunststoff ausgebildet. Das Kunststoffgehäuse der achten Ausführungsform kann allerdings beispielsweise für niedrige bis mittlere Differenzdrücke, d.h. Drücke bis 20 bar, auch in abgewandelter Form umfunktioniert werden. Der Druckanschluss 14 ist zur Vereinfachung nicht gezeigt. Der Gehäusesockel 16 und das Sensorgehäuse 12 sind integral ausgebildet, wobei der Gehäusesockel 16 als Träger 18 für das Sensorelement 20 dient. Insbesondere weist der Gehäusesockel 16 eine Öffnung 48 gemäß der achten Ausführungsform auf, die von dem Sensorelement 20 bedeckt wird. Ferner weist der Gehäusesockel 16 einen mit der Öffnung 48 verbundenen Durchlass 56 auf, der in dem Gehäusesockel 16 ausgebildet ist und sich seitlich durch die Wand des Sensorgehäuses 12 erstreckt. Im Bereich der Wand des Sensorgehäuses 12 mündet der Durchlass in einer mit der Wand verbundenen Druckleitung 54, die ein druckbeaufschlagtes Medium enthalten kann. Die Leiterplatte 22 mit der Auswerteschaltung kann auf der dem Sensorelement 20 abgewandten Seite des Gehäusesockels 16 in dem Sensorgehäuse 12 angeordnet sein. Dabei kann die Leiterplatte 22 oberhalb des Sensorelements 20 und des Durchlasses 56 angeordnet sein. Um den Gegendruck auf das Sensorelement 20 zu erzeugen, kann daher das mit dem zweiten Druck druckbeaufschlagte Medium aus der Druckleitung 54 durch den Durchlass 56 in dem Gehäusesockel 16 auf das Sensorelement 20 bzw. dessen Rückseite geführt werden. Durch das Ausbilden des Durchlasses 56 in dem Gehäusesockel 16 muss keine Abdichtung zwischen der Druckleitung 54 und dem Hohlraum im Inneren des Sensorgehäuses 12 vorgesehen werden und das Medium aus der Druckleitung 54 kann nicht in den Hohlraum des Sensorgehäuses 12, in dem sich die Leiterplatte 22 mit der empfindlichen Auswerteschaltung befindet, gelangen. Insbesondere kann eine Durchführung der Druckleitung 54 durch den Hohlraum des Sensorgehäuses 12 entfallen. Das Sensorgehäuse 12 kann wie das Sensorgehäuse 12 der siebten Ausführungsform eine Öffnung aufweisen, die von einem Deckel verschließbar ist. Das Messprinzip der Druckerfassung ist im Übrigen das gleiche wie bezüglich der ersten Ausführungsform beschrieben.

Die erfindungsgemäße Drucksensoranordnung kann zahlreiche weitere Modifikationen und bautechnische Alternativen umfassen. Der Gehäusesockel 16 kann jede beliebige Form aufweisen, insbesondere quadratisch, rechteckig, mehreckig, wie beispielsweise fünfeckig, achteckig, zehneckig und dergleichen. Das Material kann Metall, Metallverbindungen, deren Legierungen und dergleichen sein. Der Träger 18 des Sensorelements 20 kann aus einem keramischen Material, Kunststoff oder dergleichen sein. Die Leiterplatte 22 kann jede Art von Auswerteschaltung umfassen, die für eine berührungslose energetische Kopplung mit dem Sensorelement 20 geeignet ist, wie beispielsweise eine anwendungsspezifische integrierte Schaltung. Die Kontaktierung zu dem Steckerbereich kann durch jede Art von geeigneter Verbindung erfolgen, wie beispielsweise Drähte und kann mittels Kleben, Schweißen, Crimpen, Bördeln oder dergleichen erfolgen. Das Sensorelement 20 kann jede Art von geeignetem Sensorelement 20 sein und beispielsweise einen Halbleiter-Siliziumchip umfassen. Insbesondere bei flüssigen Medien werden die Sensorelemente 20 mit dem zweiten Druck beaufschlagt. Bei Drücken kleiner 100 bar kann das Sensorelement 20 ein Halbleiter-Siliziumchip sein und bei Drücken größer 100 bar kann das Sensorelement 20 eine Stahlmembran sein, in die die oben beschriebenen Bauteile eines Sensorelements 20 integriert sind. Je nach Anwendung wären auch Keramikelemente für das Sensorelement 20 denkbar. Insbesondere bei Hochdruckanwendungen sind ein geeigneter Schichtaufbau und hohe geometrische Toleranzanforderungen für das Sensorelement 20 möglich, um den Drücken widerstehen zu können. Dies kann durch eine geeignete Wahl der Materialien für das Sensorelement 20 erreicht werden.

Nachstehend erfolgt eine Beschreibung eines Verfahrens zum Herstellen einer erfindungsgemäßen Drucksensoranordnung 10, die in ihren Grundzügen für alle oben beschriebenen Ausführungsformen gilt und entsprechend der jeweiligen Ausführungsform geometrisch als auch hinsichtlich des Materials angepasst wird.

Grundsätzlich wird das Sensorelement 20 auf einem Träger 18 angebracht. Das Anbringen des Sensorelements 20 an dem Träger 18 kann insbesondere durch Löten, Aufglasen oder Kleben derart erfolgen, dass es zum Messen eines Drucks eines Mediums dem Medium aussetzbar ist. Je nach Ausführungsform kann auch ein Gehäusesockel 16 als Träger 18 dienen. Der Träger 18 kann mit weiteren Bauteilen, wie beispielsweise einem Druckanschluss 14 und/oder einem Gehäusesockel 16, beispielsweise in der Form eines Sechskants, durch Löten, Schweißen oder dergleichen verbunden werden. Anschließend wird eine Auswerteschaltung zum Ausgeben eines Signals, das den auf das Sensorelement 20 wirkenden Druck anzeigt, vorgesehen, wobei die Auswerteschaltung außerhalb des Mediums angeordnet wird und mit dem Sensorelement 20 berührungslos energetisch verbunden wird. Das Vorsehen kann beispielsweise durch Kleben erfolgen. Die berührungslose energetische Verbindung kann wie oben beschrieben durch eine induktive Verbindung erfolgen. Nachfolgend wird der Träger 18 mit einem Sensorgehäuse 12 derart durch Kleben, Schweißen, Löten oder dergleichen verbunden, dass sich die Auswerteschaltung innerhalb des Sensorgehäuses 12 befindet und somit geschützt sein kann. Die Auswerteschaltung kann dann mit einem Steckerbereich verbunden werden und somit eine elektrische Kontaktierung zu einem Außenbereich des Sensorgehäuses 12 herstellen. Die Kontaktierung kann stoffschlüssig, beispielsweise durch Schweißen oder Löten, oder formschlüssig, beispielsweise durch Bördeln erfolgen.

Falls der Träger 18 des Sensorelements 20 insbesondere aus einem keramischen Material ist und das weitere Bauteil, an dem der Träger 18 befestigt wird, wie beispielsweise ein Druckanschluss 14, aus Metall bzw. Stahl ist, kann die gegenüber dem Medium abgedichtete Verbindung zwischen diesen insbesondere durch Löten oder Schweißen erfolgen. Beim Schweißen einer derartigen Verbindung erfolgt eine kurzzeitige, intensive Erwärmung der Bauteile bis zum An- bzw. Aufschmelzen der Bauteile aus Metall, insbesondere Stahl, und/oder aus Keramik, die bei einem derartigen Verbindungsprozess auch als Fügepartner bezeichnet werden. Die kurzzeitige, intensive Erwärmung kann durch Induktion oder einen Laserstrahl erfolgen. Dabei kann gegebenenfalls ein Schweißzusatzstoff zwischen diesen Bauteilen erforderlich sein. Dies kann beispielsweise erreicht werden, indem eine Oberfläche des Trägers 18 in dem Verbindungsbereich metallisiert wird.

Werden die genannten Bauteile mittels Löten verbunden, erfolgt an dem Bauteil aus Metall bzw. Stahl eine kurzzeitige, intensive Erwärmung bis zum Aufschmelzen des Lots zwischen dem Bauteil aus Metall bzw. Stahl und der Keramik und ein anschließendes Erkalten. Auch hier kann die kurzzeitige, intensive Erwärmung durch Induktion oder einen Laserstrahl erfolgen.

Für beide Verbindungsarten gilt, dass während der Erwärmung mittels Laserstrahls auf einen auf den Umfang des jeweiligen Bauteils bezogen gleichmäßigen Temperaturgradienten zu achten ist. Dies kann beispielsweise dadurch erreicht werden, indem das Bauteil rotiert, wodurch eine gleichmäßige Verbindung zwischen den genannten Materialen sichergestellt wird.

## Patentansprüche

1. Drucksensoranordnung (100 - 900) zur Erfassung eines Drucks eines fluiden Mediums in einem Messraum, umfassend ein Sensorgehäuse (12), mindestens ein Sensorelement (20), das auf einem Träger (18) so angeordnet ist, dass es zum Messen eines Drucks des Mediums dem Medium aussetzbar ist, und eine Auswerteschaltung zum Ausgeben eines Signals, das den auf das Sensorelement (20) wirkenden Druck anzeigt, wobei die Auswerteschaltung außerhalb des Mediums angeordnet ist und mit dem Sensorelement (20) berührungslos energetisch verbunden ist, wobei der Träger (18) mit dem Sensorgehäuse (12) verbunden ist und wobei sich die Auswerteschaltung innerhalb des Sensorgehäuses (12) befindet, wobei die berührungslose energetische Verbindung zwischen der Auswerteschaltung und dem Sensorelement durch das zwischen Auswerteschaltung und Sensorelement angeordnete Material des Trägers nicht gestört wird.

2. Drucksensoranordnung (100 - 900) nach Anspruch 1, wobei der Träger (18) aus einem elektrisch nicht leitfähigen Material ausgebildet ist.

3. Drucksensoranordnung (100 - 900) nach einem der vorhergehenden Ansprüche, wobei der Träger (18) für magnetische Felder durchlässig ist.

4. Drucksensoranordnung (100 - 400) nach einem der vorhergehenden Ansprüche, wobei die Drucksensoranordnung (100 - 900) ferner einen Druckanschluss (14) umfasst, der mit dem Träger (18) des Sensorelements (20) gegenüber dem Medium abgedichtet verbunden ist.

5. Drucksensoranordnung (100 - 400) nach dem vorhergehenden Anspruch, wobei der Träger (18) aus einem keramischen Material ist und der Druckanschluss (14) aus einem Metall oder einer Metallverbindung ist.

6. Drucksensoranordnung (100 - 900) nach Anspruch 4 oder 5 ferner umfassend einen Gehäusesockel (16), der an einem Ende des Druckanschlusses (14) angeordnet ist, wobei der Träger (18) des Sensorelements (20) derart an dem Druckanschluss (14) vorgesehen ist, dass der Träger (18) aus einer Ebene des Gehäusesockels (16) vorsteht oder sich in einer Ebene des Gehäusesockels (16) befindet.

7. Drucksensoranordnung (300 - 700; 900) nach einem der vorhergehenden Ansprüche, wobei die Auswerteschaltung direkt an dem Träger (18) des Sensorelements (20) angeordnet ist.

8. Drucksensoranordnung (700 - 900) nach einem der vorhergehenden Ansprüche, wobei sich in dem Sensorgehäuse (12) ein weiteres druckbeaufschlagtes Medium befindet, so dass auf den Träger (18) des Sensorelements (20) ein Gegendruck aufbringbar ist und die Drucksensoranordnung (700 - 900) für eine Differenzdruckmessung ausgebildet ist.

9. Verfahren zum Herstellen einer Drucksensoranordnung (100 - 900) nach einem der vorhergehenden Ansprüche, umfassend die Schritte:
- Anbringen eines Sensorelements (20) an einem Träger (18), insbesondere durch Löten, Aufglasen oder Kleben, derart, dass es zum Messen eines Drucks eines Mediums dem Medium aussetzbar ist,
- Vorsehen einer Auswerteschaltung zum Ausgeben eines Signals, das den auf das Sensorelement (20) wirkenden Druck anzeigt, wobei die Auswerteschaltung außerhalb des Mediums angeordnet wird und mit dem Sensorelement (20) berührungslos energetisch verbunden wird,
- Vorsehen eines Sensorgehäuses (12), wobei der Träger (18) mit dem Sensorgehäuse (12) verbunden wird und wobei sich die Auswerteschaltung innerhalb des Sensorgehäuses (12) befindet, wobei die berührungslose energetische Verbindung zwischen der Auswerteschaltung und dem Sensorelement durch das zwischen Auswerteschaltung und Sensorelement angeordnete Material des Trägers nicht gestört wird.

10. Verfahren nach dem vorhergehenden Anspruch, wobei ferner ein Druckanschluss (14) vorgesehen wird, insbesondere ein Druckanschluss (14) aus Metall, der Träger (18) des Sensorelements (20) insbesondere aus einem keramischen Material ist und gegenüber dem Medium abgedichtet mit dem Druckanschluss (14) verbunden wird, insbesondere durch Löten, Schweißen oder Kleben.

## Claims

1. Pressure sensor arrangement (100-900) for detecting a pressure of a fluid medium in a measuring space, comprising a sensor housing (12), at least one sensor element (20) which is arranged on a carrier (18) in such a way that it can be subjected to the medium in order to measure a pressure of the medium, and an evaluation circuit for outputting a signal which indicates the pressure acting on the sensor element (20), wherein the evaluation circuit is arranged outside the medium and is energetically connected to the sensor element (20) in a contactless fashion, wherein the carrier (18) is connected to the sensor housing (12), and wherein the evaluation circuit is located within the sensor housing (12), wherein the contactless energetic connection between the evaluation circuit and the sensor element is not disrupted by the material of the carrier which is arranged between the evaluation circuit and the sensor element.

2. Pressure sensor arrangement (100-900) according to Claim 1, wherein the carrier (18) is formed of an electrically nonconductive material.

3. Pressure sensor arrangement (100-900) according to one of the preceding claims, wherein the carrier (18) is permeable to magnetic fields.

4. Pressure sensor arrangement (100-400) according to one of the preceding claims, wherein the pressure sensor arrangement (100-900) also comprises a pressure connection (14) which is connected to the carrier (18) of the sensor element (20) in such a way that it is sealed with respect to the medium.

5. Pressure sensor arrangement (100-400) according to the preceding claim, wherein the carrier (18) is made of a ceramic material, and the pressure connection (14) is made of a metal or a metal compound.

6. Pressure sensor arrangement (100-900) according to Claim 4 or 5, also comprising a housing base (16) which is arranged at one end of the pressure connection (14), wherein the carrier (18) of the sensor element (20) is provided on the pressure connection (14) in such a way that the carrier (18) protrudes from a plane of the housing base (16) or is located in a plane of the housing base (16).

7. Pressure sensor arrangement (300-700; 900) according to one of the preceding claims, wherein the evaluation circuit is directly arranged on the carrier (18) of the sensor element (20).

8. Pressure sensor arrangement (700-900) according to one of the preceding claims, wherein a further pressurized medium is located in the sensor housing (12), with the result that an opposing pressure can be applied to the carrier (18) of the sensor element (20), and the pressure sensor arrangement (700-900) is designed to measure differential pressure.

9. Method for manufacturing a pressure sensor arrangement (100-900) according to one of the preceding claims, comprising the steps:
- attaching a sensor element (20) to a carrier (18), in particular by soldering, overglazing or bonding, in such a way that it can be subjected to a medium in order to measure a pressure of the medium,
- providing an evaluation circuit for outputting a signal which indicates the pressure acting on the sensor element (20), wherein the evaluation circuit is arranged outside the medium and is energetically connected to the sensor element (20) in a contactless fashion,
- providing a sensor housing (12), wherein the carrier (18) is connected to the sensor housing (12), and wherein the evaluation circuit is located within the sensor housing (12), wherein the contactless energetic connection between the evaluation circuit and the sensor element is not disrupted by the material of the carrier which is arranged between the evaluation circuit and the sensor element.

10. Method according to the preceding claim, wherein a pressure connection (14), in particular a pressure connection (14) made of metal, is additionally provided, and the carrier (18) of the sensor element (20) is, in particular, made of a ceramic material and is connected to the pressure connection (14), in particular by soldering, welding or bonding, in such a way that it is sealed with respect to the medium.

## Revendications

1. Ensemble (100-900) de capteur de pression destiné à détecter la pression d'un milieu fluide dans un espace de mesure, l'ensemble présentant
un boîtier de capteur (12),
au moins un élément de capteur (20) disposé sur un support (18) de manière à pouvoir être exposé au fluide en vue de mesurer la pression du fluide et
un circuit d'évaluation qui délivre un signal qui indique la pression agissant sur l'élément de capteur (20),
le circuit d'évaluation étant disposé à l'extérieur du fluide et relié à échange d'énergie sans contact avec l'élément de capteur (20),
le support (18) étant relié au boîtier de capteur (12) et le circuit d'évaluation étant situé à l'intérieur du boîtier de capteur (12),
la liaison à échange d'énergie sans contact entre le circuit d'évaluation et l'élément de capteur n'étant pas perturbée par le matériau du support disposé entre le circuit d'évaluation et l'élément de capteur.

2. Ensemble (100-900) de capteur de pression selon la revendication 1, dans lequel le support (18) est formé d'un matériau électriquement non conducteur.

3. Ensemble (100-900) de capteur de pression selon l'une des revendications précédentes, dans lequel le support (18) est transparent vis-à-vis des champs magnétiques.

4. Ensemble (100-400) de capteur de pression selon l'une des revendications précédentes, dans lequel l'ensemble de capteur (100-900) comporte en outre un raccordement de pression (14) qui est relié de manière étanche vis-à-vis du fluide au support (18) de l'élément de capteur (20).

5. Ensemble (100-400) de capteur de pression selon l'une des revendications précédentes, dans lequel le support (18) est réalisé en un matériau céramique et le raccordement de pression (14) est constitué d'un métal ou d'un composé métallique.

6. Ensemble (100-900) de capteur de pression selon les revendications 4 ou 5, comprenant en outre un socle de boîtier (16) disposé à une extrémité du raccordement de pression (14), le support de l'élément de capteur étant prévu sur le raccordement de pression (14) de telle sorte que le support (18) déborde d'un plan du socle (16) de boîtier ou est situé dans un plan du socle de boîtier (16).

7. Ensemble (300-700; 900) de capteur de pression selon l'une des revendications précédentes, dans lequel le circuit d'évaluation est disposé directement sur le support (18) de l'élément de capteur (20).

8. Ensemble (700-900) de capteur de pression selon l'une des revendications précédentes, dans lequel un autre fluide mis sous pression est situé dans le boîtier de capteur (12) de telle sorte qu'une contre-pression puisse être appliquée sur le support (18) de l'élément de capteur (20), l'ensemble (700-900) de capteur de pression étant configuré pour mesurer une différence de pression.

9. Procédé de fabrication d'un ensemble (100-900) de capteur de pression selon l'une des revendications précédentes, le procédé comprenant les étapes qui consistent à :
placer un élément de capteur (20) sur un support (18), en particulier par brasage, vitrification ou collage, de telle sorte qu'il puisse être exposé à un fluide en vue de mesurer la pression du fluide,
prévoir un circuit d'évaluation délivrant un signal qui indique la pression agissant sur l'élément de capteur (20),
le circuit d'évaluation étant disposé à l'extérieur du fluide et relié à échange d'énergie sans contact avec l'élément de capteur (20),
prévoir un boîtier de capteur (12), le support (18) étant relié au boîtier de capteur (12) et le circuit d'évaluation étant situé à l'intérieur du boîtier de capteur (12),
la liaison à échange d'énergie sans contact entre le circuit d'évaluation et l'élément de capteur n'étant pas perturbée par le matériau du support disposé entre le circuit d'évaluation et l'élément de capteur.

10. Procédé selon la revendication précédente, dans lequel un raccordement de pression (14) est en outre prévu, en particulier un raccordement de pression (14) en métal, le support (18) de l'élément de capteur (20) étant en particulier réalisé en un matériau céramique et étant relié de manière étanche vis-à-vis du fluide au raccordement de pression (14), en particulier par brasage, soudage ou collage.
